# EUROPÄISCHE PATENTSCHRIFT

(11) **EP 0 640 434 B1**
(45) Veröffentlichungstag und Bekanntmachung des Hinweises auf die Patenterteilung: **29.07.1998**
(21) Anmeldenummer: 94111534.7
(22) Anmeldetag: 23.07.1994
(51) Int. Cl.: B23Q 39/04, B23Q 1/00, B23P 21/00

(54) **Montagesystem mit Werkstückaufnahmering**
Assembly system with ring for supporting workpieces
Système d'assemblage muni d'un anneau pour supporter les pièces à travailler

(30) Priorität: 28.08.1993 DE 4328988
(43) Veröffentlichungstag der Anmeldung: 01.03.1995
(73) Patentinhaber: SIM ZUFÜHR-UND Montagetechnik GmbH & CO.KG, D-37308 Heilbad Heiligenstadt (DE)
(72) Erfinder: Dornieden, Georg, Dipl.-Ing., D-37318 Burgwalde (DE); Tischendorf, Carsten, Dipl.-Ing., D-37308 Heilbad Heiligenstadt (DE)
(74) Vertreter: Honke, Manfred, Dr.-Ing.

(56) Entgegenhaltungen:
- EP-A- 0 242 870
- CH-A- 292 483
- DE-A- 2 652 566
- DE-A- 3 119 019
- DE-A- 4 304 115
- DE-U- 8 418 414
- JP-B-58 027 059

## Beschreibung

Die Erfindung betrifft ein Montagesystem mit einem Maschinengestell, einer maschinengestellfesten Kreisplatte, die eine Mehrzahl von Arbeitsstationen trägt, und einem in bezug auf die Kreisplatte konzentrischen, taktweise rotierend angetriebenen Aufnahmeteller, dessen Radius größer ist als der der Kreisplatte und der an seinem äußeren Rand einen Werkstückaufnahmering aufweist, wobei der Aufnahmeteller lediglich mit Spaltabstand unter der Kreisplatte angeordnet ist und der Werkstückaufnahmering sich im Bereich des Höhenniveaus der Kreisplatte befindet,
wobei der Antrieb des Werkstückaufnahmeringes sowie der Antrieb der Arbeitsstationen mit Hilfe einer einzigen Motor/Getriebe-Anordnung erfolgt, die kontinuierlich angetrieben ist und sich unter dem Aufnahmeteller im unteren Teil des Maschinengestells befindet, wobei die Motor/Getriebe-Anordnung über ein Rast/Schritt-Getriebe auf den Aufnahmeteller arbeitet,
wobei die Motor/Getriebe-Anordnung mit einer Steuerwelle fest verbunden ist, die aufgesetzte Kurvenscheiben aufweist,
wobei eine Betätigungseinrichtung für den Antrieb der Arbeitsstationen vorgesehen ist, die durch entsprechende Ausnehmungen in dem Aufnahmeteller und in der Kreisplatte hindurchgeführt und an die Arbeitsstationen angeschlossen ist. - Montagesystem bezeichnet eine geordnete Mehrzahl von Arbeitsstationen, die untereinander materialflußtechnisch und antriebstechnisch verknüpft sind. Solche Montagesysteme sind in verschiedenen Ausführungsformen bekannt. In der modernen automatischen Fertigungstechnik müssen solche Montagesysteme in bezug auf die betrieblichen Gegebenheiten bei unterschiedlichen Montagearbeiten flexibel anpaßbar und darüber hinaus kompakt und funktionssicher sein.

Bei dem bekannten Montagesystem, von dem die Erfindung ausgeht (DE 35 07 224 C2), ist für die betätigungstechnische Steuerung der Arbeitsstationen eine zentrale Welle vorgesehen, welche Welle von einer Motor/Getriebe-Anordnung angetrieben wird und an ihrem Kopf eine Kurvenscheibe trägt, die auf die Arbeitsstationen einwirkt. Insoweit wird ein Antrieb der Arbeitsstationen lediglich über diese eine Kurvenscheibe verwirklicht, so daß das Montagesystem nur begrenzte Möglichkeiten für die Einstellung bzw. die Anpassung an verschiedene Arbeitsbedingungen und Fertigungstechniken bietet. Dieses bekannte Montagesystem läßt daher in bezug auf die fertigungstechnische Flexibilität stark zu wünschen übrig. Die auf der zentralen Welle angeordnete Kurvenscheibe überdeckt gleichsam einen großen Teil des Montagesystems und verhindert daher eine leichte Zugänglichkeit verschiedener Elemente des Montagesystems.

Demgegenüber liegt der Erfindung das technische Problem zugrunde, ein Montagesystem des beschriebenen Aufbaues zu schaffen, welches eine sehr kompakte Bauweise und zugleich eine hohe Flexibilität und damit eine leichte Anpaßbarkeit an unterschiedliche Betriebsweisen aufweist und mit einfachen Antrieben ausgerüstet ist.

Zur Lösung dieses technischen Problems lehrt die Erfindung ein Montagesystem der eingangs beschriebenen Art, welches dadurch gekennzeichnet ist, daß die Motor/Getriebe-Anordnung mit Hilfe eines ersten Zahnriementriebes über das Rast/Schritt-Getriebe auf den Aufnahmeteller arbeitet, daß die auf die Steuerwelle aufgesetzten Kurvenscheiben den einzelnen Arbeitsstationen zugeordnet sind, daß als Betätigungseinrichtung für den Antrieb der Arbeitsstationen bogenförmig geführte Zug/Druck-Betätigungselemente verwendet sind, die von den Kurvenscheiben betätigt werden und durch die Ausnehmungen im Aufnahmeteller, in der Kreisplatte sowie durch eine Ausnehmung (13) im Rast/Schritt-Getriebe hindurchgeführt und an die einzelnen zugeordneten Arbeitsstationen angeschlossen sind, und daß die Drehzahl der Motor/Getriebe-Anordnung regelbar und auf unterschiedliche Solldrehzahlen einstellbar ist und fernerhin die Kurvenscheiben auf der Steuerwelle mit unterschiedlichem Einstellwinkel festsetzbar sind.

Die Erfindung geht von der Erkenntnis aus, daß bei Montagesystemen des eingangs beschriebenen Aufbaues eine sehr kompakte Bauweise und einfache Antriebe mit hoher Flexibilität dadurch verwirklicht werden können, daß die Merkmale aus dem Kennzeichnungsteil des Patentanspruches 1 vorgesehen werden. Die kompakte Bauweise ist insbesondere darauf zurückzuführen, daß die Zug/Druck-Betätigungselemente im Zentrum des Montagesystems durch entsprechende Ausnehmungen in dem Aufnahmeteller, in der Kreisplatte und im Rast/Schritt-Getriebe an die Arbeitsstationen angeschlossen sind.

Um eine möglichst hohe Flexibilität zu erreichen, lehrt die Erfindung, daß die Drehzahl der Motor/Getriebe-Anordnung regelbar und auf unterschiedliche Solldrehzahlen einstellbar ist, wobei fernerhin die Kurvenscheiben auf der Steuerwelle mit unterschiedlichem Einstellwinkel festsetzbar sind. Darunter wird verstanden, daß ein Punkt auf der Steuerwelle und ein Punkt auf einer darauf aufgesetzten Kurvenscheibe einander zugeordnet sind, wobei durch eine Verstellung der Kurvenscheibe ein Winkel zwischen diesen beiden Bezugspunkten sich ausbildet, der als Einstellwinkel bezeichnet wird.

Im einzelnen bestehen im Rahmen der Erfindung mehrere Möglichkeiten der weiteren Ausbildung und Gestaltung. So kann die Kreisplatte auf einer zentralen Säule gelagert sein, die von einer Hohlwelle für den Aufnahmeteller umgeben ist. Die Motor/Getriebe-Anordnung arbeitet zweckmäßigerweise mit Hilfe eines zweiten Zahnriementriebes auf die Steuerwelle, welche die Kurvenscheiben trägt, wobei die Steuerwelle mit Hilfe des ersten Zahnriementriebes das Rast/Schritt-Getriebe antreibt.

Zu einer besonders kompakten Bauweise kommt man dadurch, daß das Rast/Schritt-Getriebe auf einem Zwischentisch des Maschinengestells angeordnet ist, welcher sich höhenmäßig zwischen der Steuerwelle und dem Aufnahmeteller befindet.

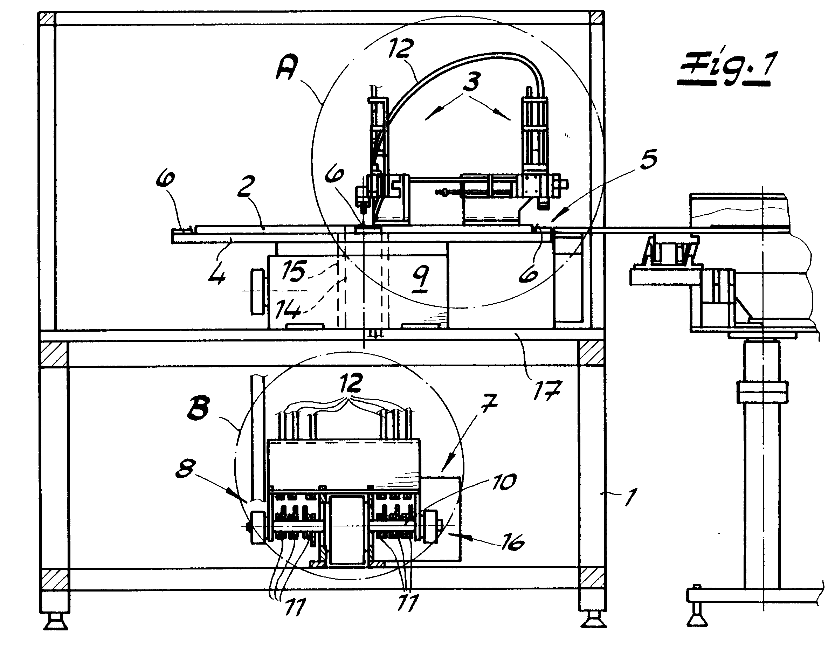

Im folgenden wird die Erfindung anhand einer lediglich ein Ausführungsbeispiel darstellenden Zeichnung ausführlicher erläutert. Es zeigen in schematischer Darstellung
- Fig. 1: eine Frontansicht des erfindungsgemäßen Montagesystems, teilweise im Schnitt,
- Fig. 2: den vergrößerten Ausschnitt A aus dem Gegenstand nach Fig. 1,

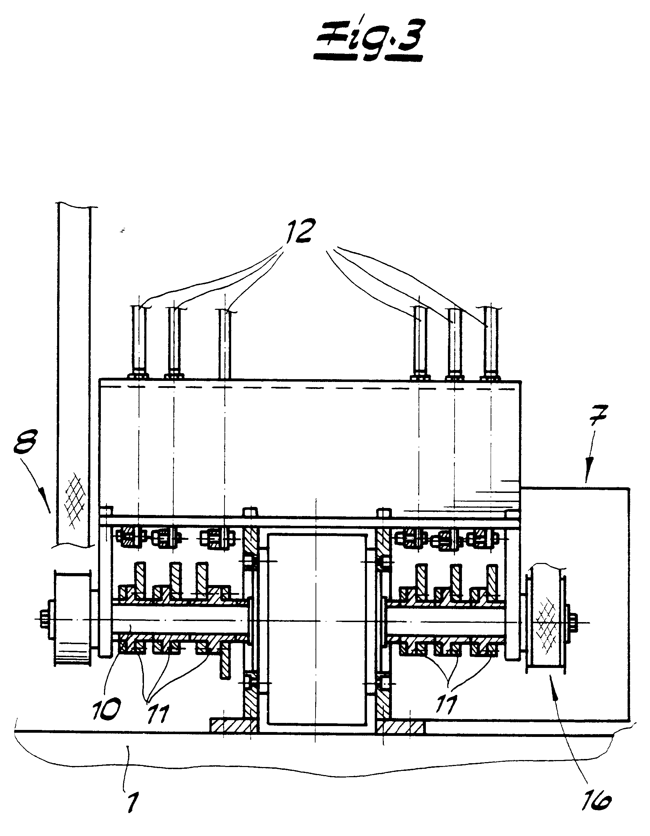

- Fig. 3: den vergrößerten Ausschnitt B aus dem Gegenstand nach Fig. 1 und
- Fig. 4: eine Draufsicht auf den Gegenstand der Fig. 1.

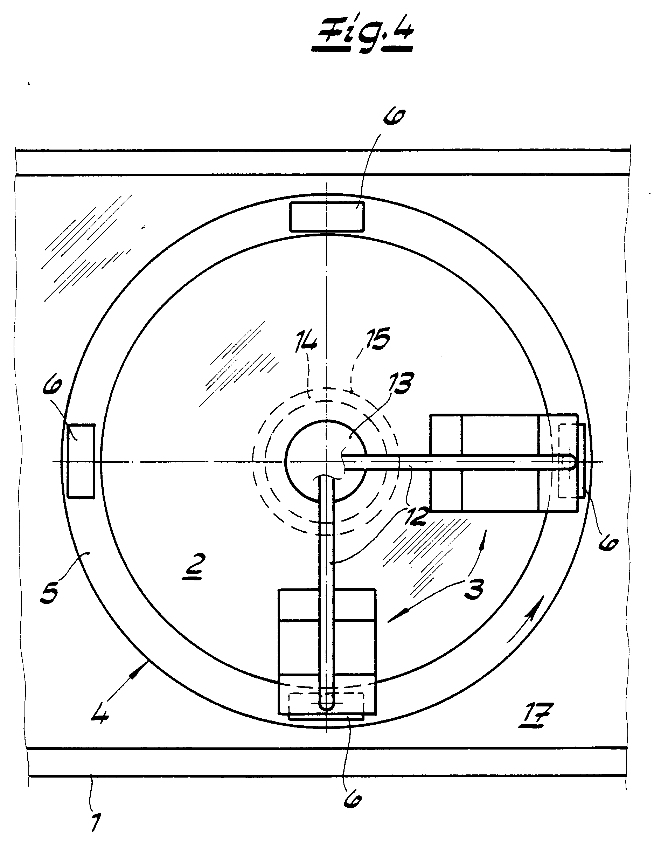

Das in den Figuren dargestellte Montagesystem besteht in seinem grundsätzlichen Aufbau aus einem Maschinengestell 1, einer maschinengestellfesten Kreisplatte 2, die eine Mehrzahl von Arbeitsstationen 3 trägt (vgl. auf Fig. 4) und einem in bezug auf die Kreisplatte konzentrischen, taktweise rotierend angetriebenen Aufnahmeteller 4. Der Radius des Aufnahmetellers 4 ist größer als der der Kreisplatte 2, der Aufnahmeteller 4 trägt an seinem äußeren Rand einen Werkstückaufnahmering 5, auf dem die verschiedenen Werkstückaufnahmestationen 6 angeordnet sind, die den Arbeitsstationen 3 zugeordnet werden können.

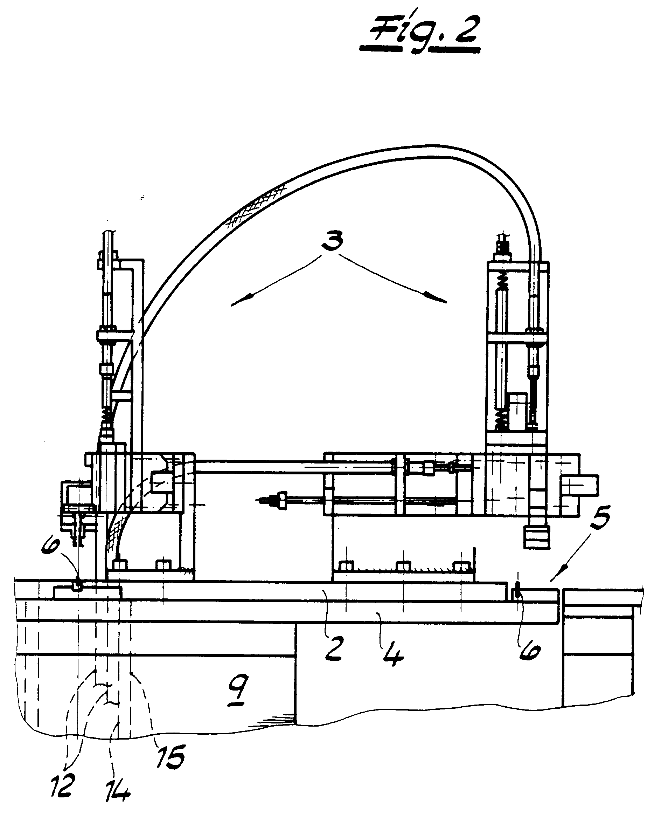

Der Aufnahmeteller 4 ist lediglich mit Spaltabstand unter der Kreisplatte 2 angeordnet, der Werkstückaufnahmering 5 befindet sich im Bereich des Höhenniveaus der Kreisplatte 2, wozu insbesondere auf die Fig. 2 verwiesen wird. Der Antrieb des Werkstückaufnahmeringes 5 sowie der Antrieb der Arbeitsstationen 3 erfolgen mit Hilfe einer einzigen Motor/Getriebe-Anordnung 7, die kontinuierlich angetrieben ist. Sie befindet sich unter dem Aufnahmeteller 4 im unteren Teil des Maschinengestells 1. Die Motor/Getriebe-Anordnung 7 arbeitet mit Hilfe eines Zahnriementriebes 8 über ein Rast/Schritt-Getriebe 9 auf den Aufnahmeteller 4. Die Motor/Getriebe-Anordnung 7 arbeitet im übrigen über eine Steuerwelle 10 mit aufgesetzten, den einzelnen Arbeitsstationen 3 zugeordneten Kurvenscheiben 11 sowie von den Kurvenscheiben 11 betätigten Zug/Druck-Betätigungselementen 12 auf die einzelnen Arbeitsstationen 3. Die Anordnung ist so getroffen, daß die Zug/Druck-Betätigungselemente 12 im Zentrum des Maschinensystems durch entsprechende Ausnehmungen 13 in dem Aufnahmeteller 4, in der Kreisplatte 2 und im Rast/Schritt-Getriebe 9 an die Arbeitsstationen 3 angeschlossen sind. Die Kreisplatte 2 ist auf einer zentralen Säule 14 des Rast/Schritt-Getriebes gelagert, die im oberen Bereich von einer Hohlwelle 15 für den Aufnahmeteller 4 umgeben ist. - Säule und Hohlwelle sind Beauteile des Rast/Schritt-Getriebes.

Die Motor/Getriebe-Anordnung 7 arbeitet mit Hilfe eines weiteren Zahnriementriebes 16 auf mindestens eine Steuerwelle 10, welche die Kurvenscheiben 11 trägt. Die Steuerwelle 10 treibt mit Hilfe des Zahnriementriebes 8 das Rast/SchrittGetriebe 9 an.

Im Ausführungsbeispiel und nach bevorzugter Ausführungsform der Erfindung befindet sich das Rast/Schritt-Getriebe 9 auf einem Zwischentisch 17 des Maschinengestell 1, welches sich höhenmäßig zwischen der Steuerwelle 10 und dem Aufnahmeteller 4 befindet. Die Drehzahl der Motor/Getriebe-Anordnung 7 ist regelbar und auf unterschiedliche Solldrehzahlen einstellbar. Die Kurvenscheiben 11 sind in der beschriebenen Weise auf der 10 Steuerwelle mit unterschiedlichem Einstellwinkel festsetzbar.

## Patentansprüche

1. Montagesystem mit einem Maschinengestell (1), einer maschinengestellfesten Kreisplatte (2), die eine Mehrzahl von Arbeitsstationen (3) trägt, und einem in bezug auf die Kreisplatte (2) konzentrischen, taktweise rotierend angetriebenen Aufnahmeteller (4), dessen Radius größer ist als der der Kreisplatte (2) und der an seinem äußeren Rand einen Werkstückaufnahmering (5) aufweist,
wobei der Aufnahmeteller (4) lediglich mit Spaltabstand unter der Kreisplatte (2) angeordnet ist und der Werkstückaufnahmering (5) sich im Bereich des Höhenniveaus der Kreisplatte (2) befindet,
wobei der Antrieb des Werkstückaufnahmeringes (5) sowie der Antrieb der Arbeitsstationen (3) mit Hilfe einer einzigen Motor/Getriebe-Anordnung (7) erfolgt, die kontinuierlich angetrieben ist und sich unter dem Aufnahmeteller (4) im unteren Teil des Maschinengestells (1) befindet, wobei die Motor/Getriebe-Anordnung (7) über ein Rast/Schritt-Getriebe (9) auf den Aufnahmeteller (4) arbeitet,
wobei die Motor/Getriebe-Anordnung (7) mit einer Steuerwelle (10) fest verbunden ist, die aufgesetzte Kurvenscheiben (11) aufweist,
wobei eine Betätigungseinrichtung (12) für den Antrieb der Arbeitsstationen (3) vorgesehen ist, die durch entsprechende Ausnehmungen (13) in dem Aufnahmeteller (4) und in der Kreisplatte (2) hindurchgeführt und an die Arbeitstationen angeschlossen ist,
**dadurch gekennzeichnet**,
daß die Motor/Getriebe-Anordnung (7) mit Hilfe eines ersten Zahnriementriebes (8) über das Rast/Schritt-Getriebe (9) auf den Aufnahmeteller (4) arbeitet,
daß die auf die Steuerwelle (10) aufgesetzten Kurvenscheiben (11) den einzelnen Arbeitsstationen (3) zugeordnet sind,
daß als Betätigungseinrichtung für den Antrieb der Arbeitsstationen (3) bogenförmig geführte Zug/Druck-Betätigungselemente (12) verwendet sind, die von den Kurvenscheiben (11) betätigt werden und durch die Ausnehmungen (13) im Aufnahmeteller (4), in der Kreisplatte (2) sowie eine Ausnehmung (13) im Rast/Schritt-Getriebe (9) hindurchgeführt und an die einzelnen zugeordneten Arbeitsstationen (3) angeschlossen sind,
und daß die Drehzahl der Motor/Getriebe-Anordnung (7) regelbar und auf unterschiedliche Solldrehzahlen einstellbar ist und fernerhin die Kurvenscheiben (11) auf der Steuerwelle (10) mit unterschiedlichem Einstellwinkel festsetzbar sind.

2. Montagesystem nach Anspruch 1, dadurch gekennzeichnet, daß die Kreisplatte (2) auf einer zentralen Säule (14) gelagert ist, die von einer Hohlwelle (15) für den Aufnahmeteller umgeben ist.

3. Montagesystem nach einem der Ansprüche 1 oder 2, dadurch gekennzeichnet, daß die Motor/Getriebe-Anordnung (7) mit Hilfe eines zweiten Zahnriementriebes (16) auf mindestens eine Steuerwelle (10) arbeitet, welche die Kurvenscheiben (11) trägt und wobei die Steuerwelle (10) mit Hilfe des ersten Zahnriementriebes (8) das Rast/Schritt-Getriebe (9) antreibt.

4. Montagesystem nach einem der Ansprüche 1 bis 3, dadurch gekennzeichnet, daß das Rast/Schritt-Getriebe (9) auf einem Zwischentisch (17) des Maschinengestells (1) angeordnet ist, welcher sich höhenmäßig zwischen der Steuerwelle (10) und dem Aufnahmeteller (4) befindet.

## Claims

1. An assembly system having a machine frame (1), a circular plate (2) which is fixed to the machine frame and which carries a multiplicity of workstations (3), and having a receiver plate (4) which is concentric with respect to the circular plate (2) and which is driven in rotation in cycles, the radius of which receiver plate is larger than that of the circular plate (2) and which has a workpiece receiver ring (5) at its outer edge,
wherein the receiver plate (4) is disposed under the circular plate (2) with a clearance spacing only and the workpiece receiver ring (5) is situated in the region of the height level of the circular plate (2),
wherein the drive of the workpiece receiver ring (5) and the drive of the workstations (3) is effected by means of a single motor/transmission arrangement (7) which is continuously driven and is situated under the receiver plate (4) in the lower part of the machine frame (1), wherein the motor/transmission arrangement (7) acts on the receiver plate (4) via a locking/step-by-step motion linkage (9),
wherein the motor/transmission arrangement (7) is fixedly attached to a camshaft (10) which comprises fitted cam plates (11),
wherein an operating device (12) is provided for the drive of the workstations (3), which operating device is passed through corresponding apertures (13) in the receiver plate (4) and in the circular plate (2) and is attached to the workstations,
characterised in that
the motor/transmission arrangement (7) acts on the receiver plate (4) via the locking/step-by-step motion linkage (9) by means of a first toothed belt drive (8),
that the cam plates (11) fitted to the camshaft (10) are associated with the individual workstations (3),
that arcuately guided compression/tension operating elements (12) are used as the operating device for the drive of the workstations (3), which compression/tension operating elements are operated by the cam plates (11) and are passed through the apertures (13) in the receiver plate (4) and in the circular plate (2) and are also passed through an aperture (13) in the locking/step-by-step motion linkage (9), and are attached to the individual associated workstations (3),
and the speed of rotation of the motor/transmission arrangement (7) can be regulated and set to different desired speeds of rotation, and in addition the cam plates (11) can be secured to the camshaft (10) at different setting angles.

2. An assembly system according to claim 1, characterised in that the circular plate (2) is mounted on a central pillar (14) which is surrounded by a hollow shaft (15) for the receiver plate.

3. An assembly system according to either one of claims 1 or 2, characterised in that the motor/transmission arrangement (7) acts by means of a second toothed belt drive (16) on at least one camshaft (10) which carries the cam plates (11), and wherein the camshaft (10) drives the locking/step-by-step motion linkage (9) by means of the first toothed belt drive (8).

4. An assembly system according to any one of claims 1 to 3, characterised in that the locking/step-by-step motion linkage (9) is disposed on an intermediate table (17) of the machine fame (1), which intermediate table is situated at a height between the camshaft (10) and the receiver plate (4).

## Revendications

1. Système d'assemblage comprenant un bâti de machine (1), une plaque circulaire (2) qui est solidaire du bâti de machine et qui porte une pluralité de stations de travail (3), et un plateau récepteur (4) qui est concentrique à la plaque circulaire (2), qui est entraîné en rotation cadencée, dont le rayon est supérieur à celui de la plaque circulaire (2) et qui, sur son bord extérieur, comporte une couronne de réception de pièces (5), le plateau récepteur (4) n'étant disposé sous la plaque circulaire (2) qu'avec la valeur d'un interstice entre eux, et la couronne de réception de pièces (5) se trouvant, en hauteur, au niveau de la plaque circulaire (2), l'entraînement de la couronne de réception de pièces (5) et l'entraînement des stations de travail (3) s'effectuant à l'aide d'un seul ensemble moteur-boîte de vitesses (7) qui est entraîné en continu et se trouve sous le plateau récepteur (4) dans la partie inférieure du bâti de machine (1), l'ensemble moteur-boîte de vitesses (7) agissant sur le plateau récepteur (4) par l'intermédiaire d'un mécanisme pas à pas à arrêts instantanés (9), l'ensemble moteur-boîte de vitesses (7) étant solidaire d'un arbre de commande (10) sur lequel sont montées des cames (11), un dispositif d'actionnement (12) étant prévu pour entraîner les stations de travail (3), traversant des évidements correspondants (13) dans le plateau récepteur (4) et dans la plaque circulaire (2) et étant relié aux stations de travail, caractérisé en ce que l'ensemble moteur-boîte de vitesses (7) agit sur le plateau récepteur (4) à l'aide d'un premier moyen d'entraînement à courroie dentée (8) par l'intermédiaire du mécanisme pas à pas à arrêts instantanés (9), en ce que les cames (11) montées sur l'arbre de commande (10) sont associées aux différentes stations de travail (3), en ce que le dispositif d'actionnement utilisé pour entraîner les stations de travail (3) est constitué par des éléments arqués d'actionnement par traction/compression (12) qui sont actionnés par les cames (11) et traversent les évidements (13) du plateau récepteur (4), de la plaque circulaire (2) ainsi qu'un évidement (13) dans le mécanisme pas à pas à arrêts instantanés (9) et qui sont reliés aux différentes stations de travail associées (3), et en ce que la vitesse de rotation de l'ensemble moteur-boîte de vitesses (7) est variable et peut être réglée sur différentes valeurs de consigne et, en outre, les cames (11) peuvent être bloquées sur l'arbre de commande (10) avec des angles de calage différents.

2. Système d'assemblage selon la revendication 1, caractérisé en ce que la plaque circulaire (2) est montée sur une colonne centrale (14) qui est entourée par un arbre creux (15) destiné au plateau récepteur.

3. Système d'assemblage selon l'une des revendications 1 ou 2, caractérisé en ce que, à l'aide d'un second moyen d'entraînement à courroie dentée (16), l'ensemble moteur-boîte de vitesses (7) agit sur au moins un arbre de commande (10) qui porte les cames (11), l'arbre de commande (10) entraînant le mécanisme pas à pas à arrêts instantanés (9) à l'aide du premier moyen d'entraînement à courroie dentée (8).

4. Système d'assemblage selon l'une des revendications 1 à 3, caractérisé en ce que le mécanisme pas à pas à arrêts instantanés (9) est disposé sur une table intermédiaire (17) du bâti de machine (1) qui, dans le sens de la hauteur, se trouve entre l'arbre de commande (10) et le plateau récepteur (4).
